# EUROPÄISCHE PATENTANMELDUNG

(11) **EP 4 169 788 A1**
(43) Veröffentlichungstag der Anmeldung: **26.04.2023**
(21) Anmeldenummer: 22197812.5
(22) Anmeldetag: 26.09.2022
(51) Int. Cl.: B60W 30/095, B60W 50/00, G01S 13/00, G01S 17/00, G01S 17/931, A01D 41/127, B60W 50/14, G01S 13/931, B60R 1/00

(54) **VERFAHREN ZUR UNTERSTÜTZUNG VON STRASSENTRANSPORTFAHRTEN MIT EINER HINTERACHSGELENKTEN LANDMASCHINE**

(30) Priorität: 22.10.2021 DE 102021127493
(71) Anmelder: Deere & Company, Moline, IL 61265 (US)
(72) Erfinder: BROCKE, STEFAN, 68163 Mannheim (DE); HECKEL, JEREMY, 68163 Mannheim (DE); REINMUTH, FLORIAN, 68163 Mannheim (DE)
(74) Vertreter: Dehnhardt, Florian Christopher

(57) **Zusammenfassung**

Verfahren zur Unterstützung von Straßentransportfahrten mit einer hinterachsgelenkten Landmaschine (10), bei dem ein bezüglich einer Vorwärtsfahrtrichtung (40) zurückliegender Fahrbahnabschnitt (42) mittels einer im Heckbereich (36) der Landmaschine (10) angeordneten Erfassungseinheit (38) hinsichtlich sich annähernder Fremdfahrzeuge (16) überwacht wird,

von einer Kontrolleinheit eine abhängig von Lenkeinschlag und Fahrtgeschwindigkeit der Landmaschine (10) auftretende Ausscherbewegung (98) des Heckbereichs (36) ermittelt wird, und von der Kontrolleinheit die Ausgabe einer Warnung veranlasst wird, wenn von dieser erkannt wird, dass sich während einer ermittelten Ausscherbewegung (98) ein Fremdfahrzeug (16) rückwärtig an die Landmaschine (10) annähert.

## Beschreibung

Die Erfindung betrifft ein Verfahren zur Unterstützung von Straßentransportfahrten mit einer hinterachsgelenkten Landmaschine.

Mit einer Hinterachslenkung ausgestattete Landmaschinen, zu denen beispielsweise Erntemaschinen oder Feldhäcksler gehören, zeichnen sich typischerweise durch ein übersteuerndes oder ausscherendes Fahrverhalten auf, das dazu führen kann, dass das Landmaschinenheck über die Begrenzungen der eigenen Fahrbahn hinaustritt. Auf öffentlichen Straßen erfordert dies seitens des Fahrers der Landmaschine besondere Aufmerksamkeit gegenüber anderen Verkehrsteilnehmern. Dies gilt gerade im Hinblick auf den nachfolgenden Verkehr, da dieser aufgrund von im Sichtbereich liegenden Fahrzeugaufbauten bzw. -verkleidungsteilen der Landmaschine für den Fahrer häufig nicht ohne Weiteres einsehbar ist.

Es ist daher Aufgabe der vorliegenden Erfindung, ein Verfahren der eingangs genannten Art dahingehend anzugeben, dass der Fahrer einer hinterachsgelenkten Landmaschine bei der Durchführung von Straßentransportfahrten entlastet wird.

Diese Aufgabe wird durch ein Verfahren mit den Merkmalen des Patentanspruchs 1 gelöst.

Das erfindungsgemäße Verfahren zur Unterstützung von Straßentransportfahrten mit einer hinterachsgelenkten Landmaschine sieht vor, dass ein bezüglich einer Vorwärtsfahrtrichtung zurückliegender Fahrbahnabschnitt mittels einer im Heckbereich der Landmaschine angeordneten Erfassungseinheit hinsichtlich sich annähernder Fremdfahrzeuge überwacht wird. Von einer Kontrolleinheit wird eine abhängig von Lenkeinschlag und Fahrtgeschwindigkeit der Landmaschine auftretende Ausscherbewegung des Heckbereichs ermittelt, wobei von der Kontrolleinheit die Ausgabe einer Warnung veranlasst wird, wenn von dieser erkannt wird, dass sich während einer ermittelten Ausscherbewegung ein Fremdfahrzeug rückwärtig an die Landmaschine annähert. Eine Ausscherbewegung des Heckbereichs tritt hierbei beim Befahren von Kurven oder auch beim Abbiegen auf. Je schmaler die befahrene Fahrbahn ist, umso kritischer sind hierbei bereits vergleichsweise geringe Ausscherbewegungen.

Das Verfahren trägt damit Situationen Rechnung, in denen ein von hinten an die Landmaschine heranfahrendes Fremdfahrzeug, beispielsweise ein Personenkraftwagen, Transporter oder Lastkraftwagen, unbemerkt in den aufgrund der Ausscherbewegung in Anspruch genommenen Schwenkbereich des Landmaschinenhecks eintritt. Dies ist vor allem beim Überholen auf einer benachbarten Fahrspur bzw. angrenzenden Gegenfahrbahn von Belang. Die Ausgabe der Warnung weist hierbei den Fahrer der Landmaschine auf die Ausführung entsprechender Gegenmaßnahmen hin, was durch Gegenlenken oder Abbremsen der Landmaschine erfolgen kann.

Bei der im Heckbereich der Landmaschine angeordneten Erfassungseinheit handelt es sich typischerweise um einen Radarsensor, ein Lidar oder ein Kamerasystem.

Die Bestimmung des Lenkeinschlags erfolgt durch sensorische Erfassung eines an lenkbaren Hinterrädern bzw. einer Lenkhandhabe auftretenden Lenkwinkels. Weiterhin wird von der Kontrolleinheit die Fahrtgeschwindigkeit auf Grundlage sensorisch erfasster Raddrehzahlen bestimmt. In diesem Zusammenhang wertet die Kontrolleinheit Informationen eines Lenkwinkelsensors bzw. zugehöriger Raddrehzahlsensoren aus, um unter Zugrundelegung des (als bekannt vorausgesetzten) dynamischen Modells der betreffenden Landmaschine, Umfang und Richtung der Ausscherbewegung zu berechnen.

Die Ausgabe der Warnung ist auf unterschiedlichen Wegen umsetzbar. So kommt neben einer Anzeige optischer bzw. visueller Informationen ebenfalls eine Erzeugung akustisch und/oder haptisch erfahrbarer Hinweise in Frage. Eine haptische Rückmeldung kann beispielsweise durch Aufprägung von Vibrationen an der Lenkhandhabe oder im Bereich einer Sitzfläche eines Fahrersitzes erfolgen.

Zusätzlich ist es denkbar, dass von der Kontrolleinheit eine Warnung des nachfolgenden Verkehrs veranlasst wird. Zu diesem Zweck kann die Kontrolleinheit unter anderem einen im Heckbereich der Landmaschine befindlichen Warnblinker in spezifischer Art und Weise, zum Beispiel durch Erzeugung aufeinanderfolgender kurzer Lichtpulse, aktivieren.

Vorteilhafte Ausgestaltungen des erfindungsgemäßen Verfahrens gehen aus den Unteransprüchen hervor.

Vorzugsweise wird mittels der Kontrolleinheit das Auftreten einer entlang eines vorausliegenden Fahrbahnabschnitts zu erwartenden Ausscherbewegung ermittelt, wobei von der Kontrolleinheit die Ausgabe einer Vorwarnung veranlasst wird, wenn von dieser erkannt wird, dass die zu erwartende Ausscherbewegung mit einer rückwärtigen Annäherung eines Fremdfahrzeugs ereignismäßig korrespondiert. Ob mit dem Auftreten einer Ausscherbewegung zu rechnen ist, lässt sich aufgrund einer entsprechenden Betätigung eines Fahrtrichtungsanzeigers erkennen oder aber aufgrund des Verlaufs des vorausliegenden Fahrbahnabschnitts abschätzen. Letzterer kann insbesondere GPS-gestützt mittels eines mit der Kontrolleinheit kommunizierenden Navigationssystems bestimmt werden. Die Ausgabe der Vorwarnung erlaubt es, den Fahrer bereits frühzeitig auf ein von hinten an die Landmaschine heranfahrendes Fremdfahrzeug aufmerksam zu machen, sodass dieser die Möglichkeit hat, sein Fahrverhalten vorausschauend anzupassen. Diese kann ebenfalls durch Anzeige optischer bzw. visueller Informationen wie auch akustisch und/oder haptisch erfolgen, wobei die Vorwarnung eine gegenüber der vorstehend erwähnten (akuten) Warnung geringere Dringlichkeit aufweist.

Beide Warnungen können hierbei bezüglich ihrer Charakteristik über eine mit der Kontrolleinheit in Verbindung stehende Nutzerschnittstelle vom Fahrer der Landmaschine frei konfiguriert werden.

Ist die Landmaschine als Erntemaschine bzw. Mähdrescher ausgebildet, so wird der zurückliegende Fahrbahnabschnitt bevorzugt ausgehend von einer oberhalb einer rückwärtigen Strohauswurföffnung liegenden Anbringungsstelle der Erfassungseinheit beobachtet. Die solchermaßen gewählte Anbringungsstelle erlaubt es der Erfassungseinheit, den zurückliegenden Fahrbahnabschnitt ungehindert zu überblicken.

Andererseits ist es im Falle einer als Feldhäcksler ausgebildeten Landmaschine möglich, dass der zurückliegende Fahrbahnabschnitt ausgehend von einer in Höhe einer gelenkten Hinterachse liegenden Anbringungsstelle der Erfassungseinheit beobachtet wird. Dies ermöglicht es der Erfassungseinheit selbst bei angebrachtem Transportanhänger, den zurückliegenden Fahrbahnabschnitt durch Nutzung des zwischen Anhängerunterseite und Fahrbahnoberfläche verlaufenden freien Sichtfelds zu überblicken.

Unter anderem zur Totwinkelvermeidung kann vorgesehen sein, dass eine weitere Erfassungseinheit in einem sich an einer Fahrerkabine seitwärts erstreckenden Seitenspiegelgehäuse untergebracht ist, wobei mittels der weiteren Erfassungseinheit eine redundante und/oder erweiterte Überwachung des zurückliegenden Fahrbahnabschnitts einschließlich der an die Landmaschine angrenzenden Seitenbereiche durchgeführt wird. Auch bei der weiteren Erfassungseinheit kann es sich um einen Radarsensor, ein Lidar oder ein Kamerasystem handeln, wobei vorzugsweise jedem der beiden Seitenspiegelgehäuse eine separate Erfassungseinheit zugeordnet ist.

Ferner besteht die Möglichkeit, dass zur Verifizierung einer rückwärtigen Annäherung eines identifizierten Fremdfahrzeugs mittels der Erfassungseinheit dessen Relativposition und/oder Relativgeschwindigkeit gegenüber der Landmaschine ermittelt wird. Dies erlaubt es der Kontrolleinheit, eine Beurteilung dahingehend vorzunehmen, ob sich das erkannte Fremdfahrzeug auf der benachbarten Fahrspur bzw. der angrenzenden Gegenfahrbahn befindet, um zum Überholen anzusetzen, und ob sich dieses an die Landmaschine annähert. Ergibt sich, dass das Fremdfahrzeug der Landmaschine auf derselben Fahrspur folgt bzw. sich langsamer als diese fortbewegt, so wird die Ausgabe einer Warnung unterbunden.

Da die Erfassungseinheit gerade im Falle einer Anbringung im Bereich der Strohauswurföffnung bzw. in Höhe der gelenkten Hinterachse in zunehmendem Maße Schmutzeinflüssen ausgesetzt ist, ist es zur Sicherstellung einer einwandfreien Funktion denkbar, dass ein sensoraktiver Bereich bzw. ein Detektorfenster der Erfassungseinheit auf Veranlassung der Kontrolleinheit mittels einer Reinigungseinrichtung selbsttätig gesäubert wird. Bei der Reinigungseinrichtung handelt es sich beispielsweise um eine auf den sensoraktiven Bereich bzw. das Detektorfenster gerichtete Waschflüssigkeitsdüse, einen elektrisch angetriebenen Wischer und/oder ein Druckluftgebläse.

Insbesondere kann von der Kontrolleinheit aufgrund von erkannten Funktionseinschränkungen der Erfassungseinheit und/oder von sensorisch erfassten Schmutzablagerungen auf die Notwendigkeit der Durchführung eines Reinigungsvorgangs geschlossen werden. Mit anderen Worten erfolgt eine indirekte oder direkte Erkennung der Schmutzablagerungen. So gehen Funktionseinschränkungen der Erfassungseinheit insoweit mit einer erkennbaren Abnahme der Sensordatenqualität bis hin zu möglichen Aussetzern einher, geben mithin indirekt Auskunft über den Verschmutzungsgrad. Eine direkte sensorische Erfassung der Schmutzablagerungen kann hingegen durch Messung auftretender Permeabilitätsänderungen mittels eines kapazitiven Oberflächensensors erfolgen.

Es sei angemerkt, dass sich das erfindungsgemäße Verfahren auch dahingehend ergänzen lässt, um beim Abbiegen über eine benachbarte Fahrspur bzw. angrenzende Gegenfahrbahn ein zum Überholen ansetzendes Fremdfahrzeug frühzeitig zu erkennen sowie den Fahrer der Landmaschine durch Ausgabe einer entsprechenden Warnung darauf aufmerksam zu machen.

Das erfindungsgemäße Verfahren zur Unterstützung von Straßentransportfahrten mit einer hinterachsgelenkten Landmaschine wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: eine von oben dargestellte hinterachsgelenkte Land-maschine beim Befahren einer kurvigen Fahrtstrecke,
- Fig. 2: die in Fig. 1 dargestellte hinterachsgelenkte Landmaschine beim Abbiegen in eine Seitenstraße,
- Fig. 3: eine schematisch dargestellte Anordnung zur Ausführung des erfindungsgemäßen Verfahrens,
- Fig. 4: eine mit der Anordnung gemäß Fig. 3 ausgestattete hinterachsgelenkte Landmaschine in Gestalt einer Erntemaschine,
- Fig. 5: eine mit der Anordnung gemäß Fig. 3 ausgestattete hinterachsgelenkte Landmaschine in Gestalt eines Feldhäckslers, und
- Fig. 6: ein schematisch dargestelltes Ausführungsbeispiel des erfindungsgemäßen Verfahrens in Gestalt eines Blockdiagramms.

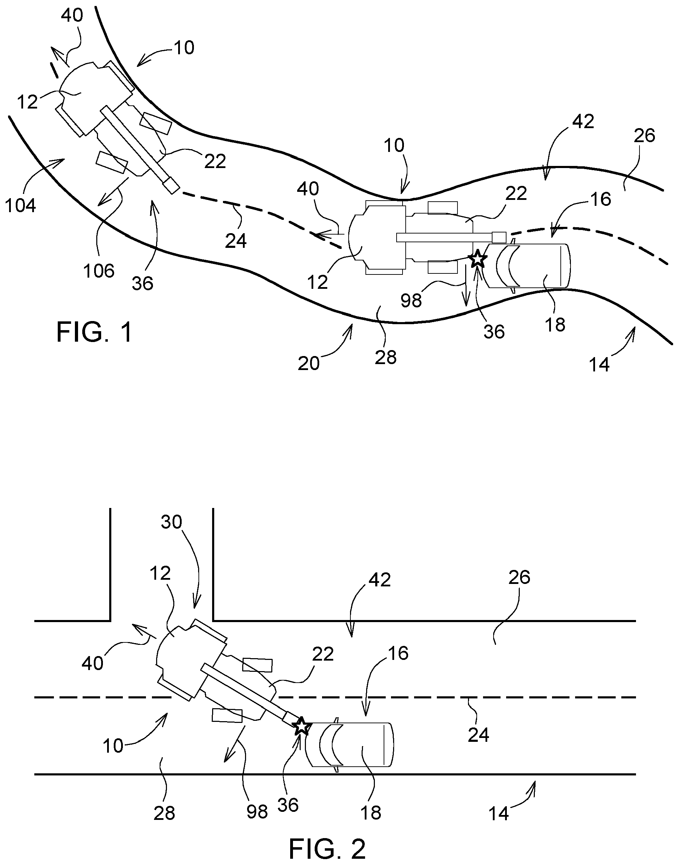

Fig. 1 zeigt eine in Aufsicht dargestellte hinterachsgelenkte Landmaschine 10 während der Durchführung einer Straßentransportfahrt entlang einer kurvigen Fahrtstrecke.

Beispielsgemäß handelt es sich bei der Landmaschine 10 um einen Feldhäcksler 12, der dem Verlauf einer zweispurigen Landstraße 14 folgt. Aufgrund der vergleichsweise geringen Fahrtgeschwindigkeit der Landmaschine 10 von allenfalls 40 km/h neigt der nachfolgende Verkehr zu Überholmanövern selbst in kurvigen Streckabschnitten. Eine derartige Situation ist in Fig. 1 für ein der Landmaschine 10 folgendes Fremdfahrzeug 16 in Gestalt eines Personenkraftwagens 18 wiedergegeben. Demgemäß setzt das Fremdfahrzeug 16 in Richtung einer vorausliegenden Rechtskurve 20 zum Überholen an. Die Landmaschine 10 befindet sich bereits in der Rechtskurve 20, wobei das Landmaschinenheck 22 über die durch eine Mittellinie veranschaulichte Begrenzungen 24 der eigenen Fahrbahn 26 in Richtung der angrenzenden Gegenfahrbahn 28 hinaustritt. Das von hinten heranfahrende Fremdfahrzeug 16 wird dementsprechend beim Überholen behindert.

In Fig. 2 ist eine ähnliche Situation für den Fall wiedergegeben, dass die in Fig. 1 gezeigte Landmaschine 10 rechts in einen von der Landstraße 14 abgehenden Seitenweg 30 einbiegt.

Die vorstehende Darstellung einer als Feldhäcksler 12 ausgebildeten Landmaschine 10 hat lediglich beispielhaften Charakter. Vielmehr kann es sich stattdessen auch um eine Erntemaschine oder ein beliebiges anderes, mit einer Hinterachslenkung ausgestattetes landwirtschaftliches Nutzfahrzeug handeln.

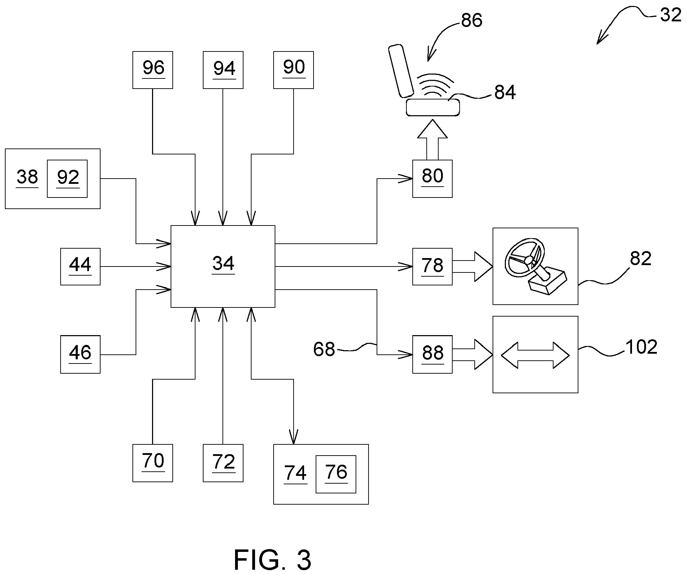

Fig. 3 zeigt eine schematisch dargestellte Anordnung 32 zur Ausführung des erfindungsgemäßen Verfahrens.

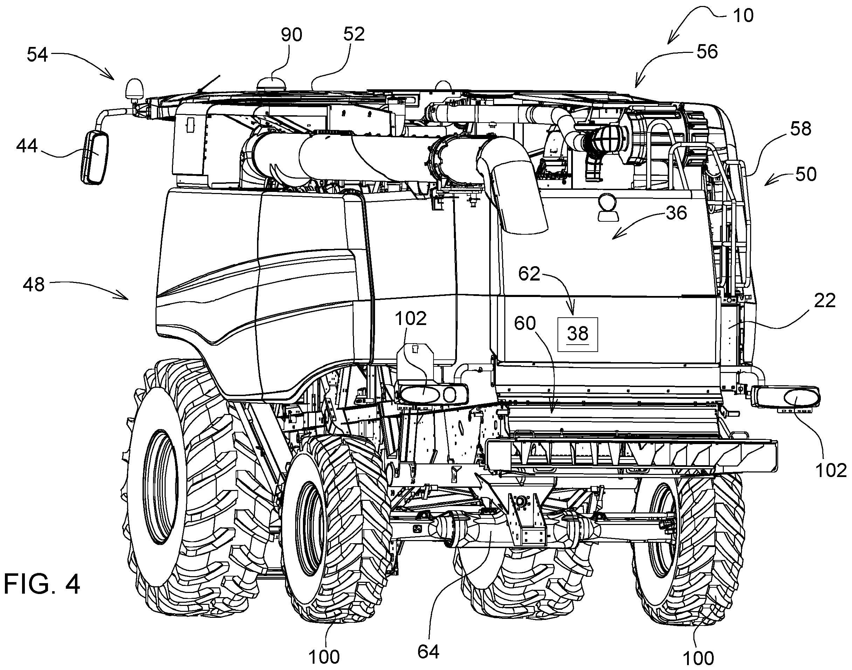

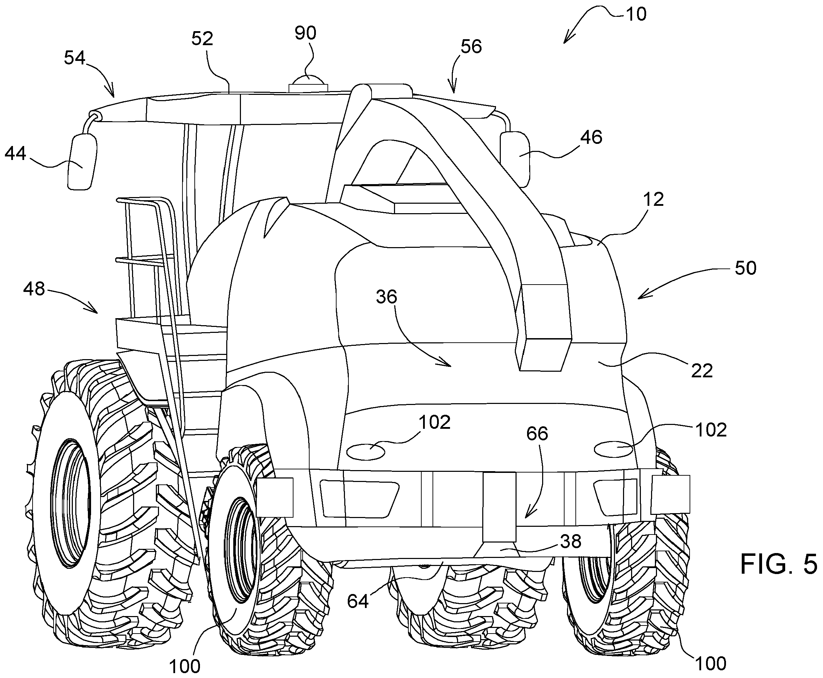

Die Anordnung 32 weist eine mikroprozessorgesteuerter Kontrolleinheit 34 auf, die mit einer im Heckbereich 36 der Landmaschine 10 angeordneten Erfassungseinheit 38 zur Überwachung eines bezüglich einer Vorwärtsfahrtrichtung 40 zurückliegenden Fahrbahnabschnitts 42 kommuniziert. Wie sich durch Vergleich mit Fig. 4 bzw. Fig. 5 erkennen lässt, sind unter anderem zur Totwinkelvermeidung weitere Erfassungseinheiten 44, 46 zur redundanten und/oder erweiterten Überwachung des zurückliegenden Fahrbahnabschnitts 42 einschließlich der an die Landmaschine 10 angrenzenden Seitenbereiche 48, 50 in sich an einer Fahrerkabine 52 seitwärts erstreckenden Seitenspiegelgehäusen 54, 56 untergebracht. Jedem der beiden Seitenspiegelgehäuse 54, 56 ist eine separate Erfassungseinheit 44, 46 zugeordnet (im Falle der in Fig. 4 dargestellten Erntemaschine 58 ist lediglich die rechte weitere Erfassungseinheit 44 zu sehen, die linke weitere Erfassungseinheit 46 hingegen ist in der gewählten Ansicht durch die Fahrerkabine 52 verdeckt).

Die Wahl des Anbringungsorts der heckseitigen Erfassungseinheit 38 unterscheidet sich hierbei je nach Landmaschinentyp.

Ist die Landmaschine 10 entsprechend Fig. 4 als Erntemaschine bzw. Mähdrescher 58 ausgebildet, so wird der zurückliegende Fahrbahnabschnitt 42 ausgehend von einer oberhalb einer rückwärtigen Strohauswurföffnung 60 liegenden Anbringungsstelle 62 der heckseitigen Erfassungseinheit 38 beobachtet. Die solchermaßen gewählte Anbringungsstelle 62 erlaubt es der heckseitigen Erfassungseinheit 38, den zurückliegenden Fahrbahnabschnitt 42 ungehindert zu überblicken.

Andererseits ist entsprechend Fig. 5 im Falle einer als Feldhäcksler 12 ausgebildeten Landmaschine 10 vorgesehen, dass der zurückliegende Fahrbahnabschnitt 42 ausgehend von einer in Höhe der gelenkten Hinterachse 64 liegenden Anbringungsstelle 66 der heckseitigen Erfassungseinheit 38 beobachtet wird. Dies ermöglicht es der heckseitigen Erfassungseinheit 38 selbst bei angebrachtem Transportanhänger, den zurückliegenden Fahrbahnabschnitt 42 durch Nutzung des zwischen Anhängerunterseite und Fahrbahnoberfläche verlaufenden freien Sichtfelds zu überblicken.

Bei den Erfassungseinheiten 38, 44, 46 handelt es sich jeweils um einen Radarsensor, ein Lidar oder ein Kamerasystem.

Des Weiteren steht die Kontrolleinheit 34 über einen CAN-Bus 68 mit einem Lenkwinkelsensor 70, mehreren Raddrehzahlsensoren 72, sowie einer Nutzerschnittstelle 74 in Verbindung, wobei die Nutzerschnittstelle 74 unter anderem ein berührungsempfindliches Display 76 zur bedienerseitigen Konfiguration der Anordnung 32 sowie zur Anzeige optischer und/oder visueller Informationen aufweist.

Zur Erzeugung akustisch und/oder haptisch erfahrbarer Hinweise ist ferner ein jeweiliger Signalgeber 78, 80 vorgesehen. Eine haptische Rückmeldung erfolgt hierbei durch Aufprägung von Vibrationen an einer Lenkhandhabe 82 oder im Bereich einer Sitzfläche 84 eines Fahrersitzes 86.

Zusätzlich hat die Kontrolleinheit 34 über den CAN-Bus 68 Zugriff auf die Steuerung eines Fahrtrichtungsanzeigers 88 der Landmaschine 10.

Ein mit der Kontrolleinheit 34 kommunizierendes Navigationssystem 90 dient der GPS-gestützten Erfassung der aktuellen Position der Landmaschine 10 sowie der Bereitstellung zugehöriger kartografischer Informationen insbesondere hinsichtlich des Straßenverlaufs.

Zur Säuberung eines sensoraktiven Bereichs bzw. eines Detektorfensters 92 der heckseitigen Erfassungseinheit 38 ist eine von der Kontrolleinheit 34 betätigbare Reinigungseinrichtung 94 vorgesehen. Auskunft über den Verschmutzungsgrad gibt unter anderem ein kapazitiver Oberflächensensor 96.

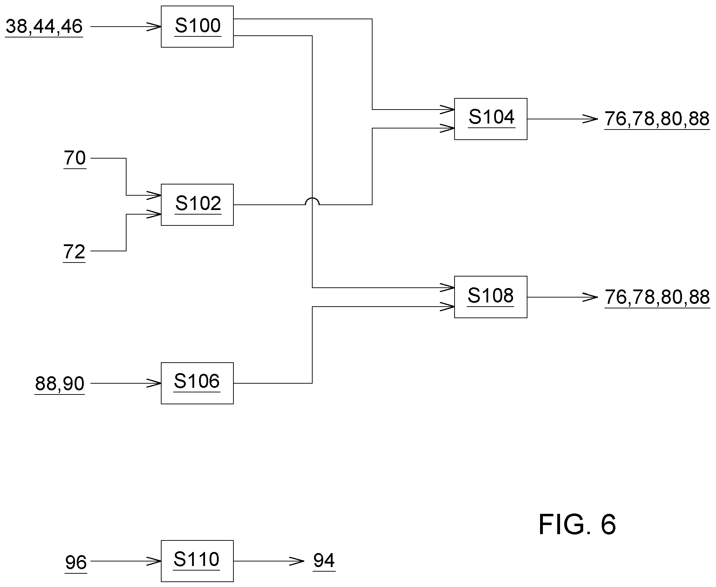

Die Funktionsweise der Anordnung 32 wird nachfolgend in Verbindung mit dem Ablauf des erfindungsgemäßen Verfahrens erläutert. In diesem Zusammenhang zeigt Fig. 6 ein schematisch dargestelltes Ausführungsbeispiel des erfindungsgemäßen Verfahrens in Gestalt eines Blockdiagramms.

Hierbei wird von der Kontrolleinheit 34 in einem ersten Funktionsblock S100 der zurückliegende Fahrbahnabschnitt 42 einschließlich der an die Landmaschine 10 angrenzenden Seitenbereiche 48, 50 mittels der Erfassungseinheiten 38, 44, 46 hinsichtlich sich annähernder Fremdfahrzeuge überwacht (siehe hierzu Fig. 1 oder Fig. 2).

Zur Verifizierung einer rückwärtigen Annäherung eines identifizierten Fremdfahrzeugs 16 wird im ersten Funktionsblock S100 zugleich dessen Relativposition und/oder Relativgeschwindigkeit gegenüber der Landmaschine 10 ermittelt. Letzteres erfolgt ebenfalls unter Verwendung der Erfassungseinheiten 38, 44, 46. Dies erlaubt es der Kontrolleinheit 34, eine Beurteilung dahingehend vorzunehmen, ob sich das erkannte Fremdfahrzeug 16 auf der benachbarten Fahrspur bzw. der angrenzenden Gegenfahrbahn 28 befindet, um zum Überholen anzusetzen, und ob sich dieses an die Landmaschine 10 annähert.

In einem zeitgleich zum ersten Funktionsblock S100 ausgeführten zweiten Funktionsblock S102 wird von der Kontrolleinheit 34 eine abhängig von Lenkeinschlag und Fahrtgeschwindigkeit der Landmaschine 10 auftretende Ausscherbewegung 98 des Heckbereichs 36 ermittelt. Die Bestimmung des Lenkeinschlags erfolgt durch sensorische Erfassung eines an lenkbaren Hinterrädern 100 bzw. der Lenkhandhabe 82 auftretenden Lenkwinkels. Weiterhin wird von der Kontrolleinheit 34 die Fahrtgeschwindigkeit auf Grundlage sensorisch erfasster Raddrehzahlen bestimmt. In diesem Zusammenhang wertet die Kontrolleinheit 34 Informationen des Lenkwinkelsensors 70 bzw. der Raddrehzahlsensoren 72 aus, um unter Zugrundelegung des als bekannt vorausgesetzten dynamischen Modells der betreffenden Landmaschine 10, Umfang und Richtung der Ausscherbewegung 98 zu berechnen.

Die Ergebnisse des ersten und zweiten Funktionsblocks S100, S102 werden anschließend an einen dritten Funktionsblock S104 übermittelt. Hier wird von der Kontrolleinheit 34 die Ausgabe einer Warnung veranlasst, wenn von dieser erkannt wird, dass die Ausscherbewegung 98 in Richtung der benachbarten Fahrspur bzw. angrenzenden Gegenfahrbahn 28 erfolgt und sich zugleich das Fremdfahrzeug 16 rückwärtig an die Landmaschine 10 annähert - siehe hierzu die beiden beispielhaften Situationen gemäß Fig. 1 und Fig. 2. Die Ausgabe der Warnung weist hierbei den Fahrer der Landmaschine 10 auf die Ausführung entsprechender Gegenmaßnahmen hin, was durch Gegenlenken oder Abbremsen der Landmaschine 10 erfolgen kann.

Ergibt sich im zweiten Funktionsblock S102 hingegen, dass das Fremdfahrzeug 16 der Landmaschine 10 auf derselben Fahrspur folgt bzw. sich langsamer als diese fortbewegt und damit zurückfällt, so wird die Ausgabe einer Warnung im dritten Funktionsblock S104 unterbunden.

Optional wird von der Kontrolleinheit 34 auch eine Warnung des nachfolgenden Verkehrs veranlasst. Zu diesem Zweck aktiviert die Kontrolleinheit 34 durch Eingreifen in die Steuerung des Fahrtrichtungsanzeigers 88 unter anderem einen im Heckbereich 36 der Landmaschine befindlichen Warnblinker 102 durch Erzeugung aufeinanderfolgender kurzer Lichtpulse. Die spezifische Art und Weise eine derartigen Lichtfolge hebt sich dabei auffallend von einer gewöhnlichen Warnblinkerbetätigung ab.

Daneben wird in einem vierten Funktionsblock S106 mittels der Kontrolleinheit 34 das Auftreten einer entlang eines vorausliegenden Fahrbahnabschnitts 104 zu erwartenden Ausscherbewegung 106 ermittelt (siehe hierzu Fig. 1). Ob mit dem Auftreten einer Ausscherbewegung 106 zu rechnen ist, wird von der Kontrolleinheit 34 aufgrund einer entsprechenden Betätigung des Fahrtrichtungsanzeigers 88 erkannt oder aber aufgrund des Straßenverlaufs des vorausliegenden Fahrbahnabschnitts 104 abgeschätzt. Letzterer wird GPS-gestützt mittels des mit der Kontrolleinheit 34 kommunizierenden Navigationssystems 90 bestimmt.

Wird von der Kontrolleinheit 34 erkannt, dass die zu erwartende Ausscherbewegung 106 in Richtung der benachbarten Fahrspur bzw. angrenzenden Gegenfahrbahn 28 erfolgt sowie mit einer rückwärtigen Annäherung des Fremdfahrzeugs 16 ereignismäßig korrespondiert, so wird von dieser in einem fünften Funktionsblock S108 die Ausgabe einer Vorwarnung veranlasst. Die Ausgabe der Vorwarnung erlaubt es, den Fahrer bereits frühzeitig auf das von hinten an die Landmaschine 10 heranfahrende Fremdfahrzeug 16 aufmerksam zu machen, sodass dieser die Möglichkeit hat, sein Fahrverhalten vorausschauend anzupassen.

Sowohl die Ausgabe der Warnung im dritten Funktionsblock S104 wie auch diejenige der Vorwarnung im fünften Funktionsblock S108 erfolgt durch Anzeige optischer bzw. visueller Informationen wie auch akustisch und/oder haptisch, wozu das Display 76 wie auch die Signalgeber 78, 80 von der Kontrolleinheit 34 entsprechend angesteuert werden. Beide Warnungen lassen sich hierbei bezüglich ihrer Charakteristik über die mit der Kontrolleinheit 34 in Verbindung stehende Nutzerschnittstelle 74 vom Fahrer der Landmaschine 10 frei konfigurieren.

Da die heckseitige Erfassungseinheit 38 gerade im Falle einer Anbringung im Bereich der Strohauswurföffnung 60 bzw. in Höhe der gelenkten Hinterachse 64 in zunehmendem Maße Schmutzeinflüssen ausgesetzt ist, ist zur Sicherstellung einer einwandfreien Funktion vorgesehen, dass der sensoraktiver Bereich bzw. das Detektorfenster 92 zumindest der heckseitigen Erfassungseinheit 38 auf Veranlassung der Kontrolleinheit 34 mittels der Reinigungseinrichtung 94 selbsttätig gesäubert wird.

Hierbei wird in einem separaten sechsten Funktionsblock S110 von der Kontrolleinheit 34 aufgrund von erkannten Funktionseinschränkungen der heckseitigen Erfassungseinheit 38 und/oder von sensorisch erfassten Schmutzablagerungen auf die Notwendigkeit der Durchführung eines Reinigungsvorgangs geschlossen. Mit anderen Worten erfolgt eine indirekte oder direkte Erkennung der Schmutzablagerungen. So gehen Funktionseinschränkungen der heckseitigen Erfassungseinheit 38 insoweit mit einer erkennbaren Abnahme der Sensordatenqualität bis hin zu möglichen Aussetzern einher. Eine direkte sensorische Erfassung der Schmutzablagerungen erfolgt hingegen unter Verwendung des kapazitiven Oberflächensensors 96.

## Patentansprüche

1. Verfahren zur Unterstützung von Straßentransportfahrten mit einer hinterachsgelenkten Landmaschine, bei dem
ein bezüglich einer Vorwärtsfahrtrichtung (40) zurückliegender Fahrbahnabschnitt (42) mittels einer im Heckbereich (36) der Landmaschine (10) angeordneten Erfassungseinheit (38) hinsichtlich sich annähernder Fremdfahrzeuge (16) überwacht wird,
von einer Kontrolleinheit (34) eine abhängig von Lenkeinschlag und Fahrtgeschwindigkeit der Landmaschine (10) auftretende Ausscherbewegung (98) des Heckbereichs (36) ermittelt wird, und
von der Kontrolleinheit (34) die Ausgabe einer Warnung veranlasst wird, wenn von dieser erkannt wird, dass sich während einer ermittelten Ausscherbewegung (98) ein Fremdfahrzeug (16) rückwärtig an die Landmaschine (10) annähert.

2. Verfahren nach Anspruch 1, **dadurch gekennzeichnet, dass** mittels der Kontrolleinheit (34) das Auftreten einer entlang eines vorausliegenden Fahrbahnabschnitts (104) zu erwartenden Ausscherbewegung (106) ermittelt wird, wobei von der Kontrolleinheit (34) die Ausgabe einer Vorwarnung veranlasst wird, wenn von dieser erkannt wird, dass die zu erwartende Ausscherbewegung (106) mit einer rückwärtigen Annäherung eines Fremdfahrzeugs (16) ereignismäßig korrespondiert.

3. Verfahren nach Anspruch 1 oder 2, **dadurch gekennzeichnet, dass** im Falle einer als Erntemaschine (58) ausgebildeten Landmaschine (10) der zurückliegende Fahrbahnabschnitt (42) ausgehend von einer oberhalb einer rückwärtigen Strohauswurföffnung (60) liegenden Anbringungsstelle (62) der Erfassungseinheit (38) beobachtet wird.

4. Verfahren nach Anspruch 1 oder 2, **dadurch gekennzeichnet, dass** im Falle einer als Feldhäcksler (12) ausgebildeten Landmaschine (10) der zurückliegende Fahrbahnabschnitt (42) ausgehend von einer in Höhe einer gelenkten Hinterachse (64) liegenden Anbringungsstelle (66) der Erfassungseinheit (38) beobachtet wird.

5. Verfahren nach wenigstens einem der vorhergehenden Ansprüche, **dadurch gekennzeichnet, dass** eine weitere Erfassungseinheit (44, 46) in einem sich an einer Fahrerkabine (52) seitwärts erstreckenden Seitenspiegelgehäuse (54, 56) untergebracht ist, wobei mittels der weiteren Erfassungseinheit (44, 46) eine redundante und/oder erweiterte Überwachung des zurückliegenden Fahrbahnabschnitts (42) einschließlich der an die Landmaschine (10) angrenzenden Seitenbereiche (48, 50) durchgeführt wird.

6. Verfahren nach wenigstens einem der vorhergehenden Ansprüche, **dadurch gekennzeichnet, dass** zur Verifizierung einer rückwärtigen Annäherung eines identifizierten Fremdfahrzeugs (16) mittels der Erfassungseinheit (38, 44, 46) dessen Relativposition und/oder Relativgeschwindigkeit gegenüber der Landmaschine (10) ermittelt wird.

7. Verfahren nach wenigstens einem der vorhergehenden Ansprüche, **dadurch gekennzeichnet, dass** ein sensoraktiver Bereich bzw. ein Detektorfenster (92) der Erfassungseinheit (38) auf Veranlassung der Kontrolleinheit (34) mittels einer Reinigungseinrichtung (94) selbsttätig gesäubert wird.

8. Verfahren nach Anspruch 7, **dadurch gekennzeichnet, dass** von der Kontrolleinheit (34) aufgrund von erkannten Funktionseinschränkungen der Erfassungseinheit (38, 44, 46) und/oder von sensorisch erfassten Schmutzablagerungen auf die Notwendigkeit der Durchführung eines Reinigungsvorgangs geschlossen wird.
